# EUROPÄISCHE PATENTSCHRIFT

(11) **EP 4 029 168 B1**
(45) Veröffentlichungstag und Bekanntmachung des Hinweises auf die Patenterteilung: **02.04.2025**
(21) Anmeldenummer: 20810883.7
(22) Anmeldetag: 17.11.2020
(51) Int. Cl.: H04J 3/06, G08C 19/00

(54) **VERFAHREN ZUM BETREIBEN EINES GERÄTS, GERÄT UND SYSTEM**
METHOD OF OPERATIONING A DEVICE, DEVICE AND SYSTEM
PROCÉDÉ D'OPÉRATION D'UN DISPOSITIF, DISPOSITIF ET SYSTÈME

(30) Priorität: 25.11.2019 DE 102019131848
(43) Veröffentlichungstag der Anmeldung: 20.07.2022
(73) Patentinhaber: Beckhoff Automation GmbH, 33415 Verl (DE)
(72) Erfinder: EVENBURG, Birger, 23564 Lübeck (DE)
(74) Vertreter: Patentanwaltskanzlei WILHELM & BECK
(86) Internationale Anmeldenummer: PCT/EP2020/082355
(87) Internationale Veröffentlichungsnummer: WO 2021/104934

(56) Entgegenhaltungen:
- WO-A2-02/073850
- DE-A1- 10 128 258
- US-A- 4 583 865
- "REAL TIME CLOCK TIMEBASE WITH AUTOMATIC 50/60 HERTZ SYNCHRONIZATION", MOTOROLA TECHNICAL DEVELOPMENTS,, vol. 4, no. 1, 1 April 1984 (1984-04-01), pages 20 - 21, XP001439303
- FRANK H ET AL: "Clock synchronization of distributed computers in building automation networks using an AC power supply", INDUSTRIAL ELECTRONICS, 2008. IECON 2008. 34TH ANNUAL CONFERENCE OF IEEE, IEEE, PISCATAWAY, NJ, USA, 10 November 2008 (2008-11-10), pages 2730 - 2735, XP031825841, ISBN: 978-1-4244-1767-4

## Beschreibung

Die vorliegende Erfindung betrifft ein Verfahren zum Betreiben eines Geräts, ein Gerät und ein System mit mindestens zwei Geräten.

Diese Patentanmeldung beansprucht die Priorität der deutschen Patentanmeldung DE 10 2019 131 848.3.

Es ist aus dem Stand der Technik bekannt, Geräte mit internen Uhren auszustatten, die mittels eines internen Taktgebers inkrementiert werden. Die Frequenzen derartiger interner Taktgeber unterliegen allerdings bekanntermaßen Fertigungstoleranzen und können auch Abhängigkeiten von äußeren Bedingungen wie der Temperatur aufweisen. Dies hat zur Folge, dass die internen Uhren zweier Geräte mit unterschiedlichen Geschwindigkeiten laufen können.

Es sind aus dem Stand der Technik verschiedene Möglichkeiten bekannt, die internen Uhren mehrerer Geräte miteinander zu synchronisieren. Eine solche Synchronisation kann beispielsweise mittels einer über ein Datennetzwerk mit den Geräten verbundenen Zeitquelle oder über in GPS-Signalen enthaltene Zeitinformationen erfolgen.

Ebenfalls sind aus dem Stand der Technik Synchronuhren bekannt, die ihre Zeitbasis aus der Netzfrequenz eines Stromversorgungsnetzes ableiten.

Das Dokument FRANK H ET AL: "Clock synchronization of distributed computers in building automation networks using an AC power supply", INDUSTRIAL ELECTRONICS, 2008. IECON 2008. 34TH ANNUAL CONFERENCE OF IEEE, IEEE, PISCATAWAY, NJ, USA, 10. November 2008 (2008-11-10), Seiten 2730-2735, XP031825841, ISBN: 978-1-4244-1767-4, beschreibt ein Verfahren zur Zeitsynchronisierung zwischen einem Master und einem Slave. Der Master generiert einen Zeitstempel bei einem Nulldurchgang der Netzspannung und versendet diesen zum Slave. Der Slave synchronisiert seine Zeit auf Basis des empfangenden Zeitstempels.

Der Artikel ANTHONY ROWE ET AL: "Low-power clock synchronization using electromagnetic energy radiating from AC power lines", PROCEEDINGS OF THE 7TH ACM CONFERENCE ON EMBEDDED NETWORKED SENSOR SYSTEMS, CA, USA, NOVEMBER 04 - 06, 2009, ACM, NEW YORK, NY, USA, 4. November 2009 (2009-11-04), Seiten 211-224, XP058271115, DOI: 10.1145/1644038.1644060: ISBN: 978-1-60558-519-2 beschreibt eine Vorrichtung zum Erreichen einer Uhrensynchronisation, die ein von Wechselstromleitungen abgestrahltes Magnetfeld als Synchronisationssignal nutzt.

Das Dokument "REAL TIME CLOCK TIMEBASE WITH AUTOMATIC 50/60 HERTZ SYNCHRONIZATION", MOTOROLA TECHNICAL DEVELOPMENTS, Bd. 4, NR. 1, 1. April 1984 (1984-04-01), Seiten 20-21, XP0014393903, beschreibt eine Echtzeitquelle mit einer automatischen Netzfrequenzsynchronisation.

Die US 4 583 865 A beschreibt ein Verfahren, um eine Uhr mit einer Netzfrequenz zu synchronisieren.

Eine Aufgabe der vorliegenden Erfindung besteht darin, ein Verfahren zum Betreiben eines Geräts anzugeben. Eine weitere Aufgabe der vorliegenden Erfindung besteht darin, ein Gerät bereitzustellen. Eine weitere Aufgabe der vorliegenden Erfindung besteht darin, ein System mit einem ersten derartigen Gerät und einem zweiten derartigen Gerät bereitzustellen. Diese Aufgaben werden durch ein Verfahren zum Betreiben eines Geräts, durch ein Gerät und durch ein System mit den Merkmalen der jeweiligen unabhängigen Ansprüche gelöst. In den abhängigen Ansprüchen sind verschiedene Weiterbildungen angegeben.

Bei einem Verfahren zum Betreiben eines Geräts, das einen internen Taktgeber und eine interne Uhr aufweist und mit einem Netz verbunden ist, wird die interne Uhr mittels des internen Taktgebers inkrementiert. Dabei wird die interne Uhr mit einer Netzfrequenz des Netzes synchronisiert. Das Netz kann beispielsweise ein Stromversorgungsnetz sein. Vorteilhafterweise wird durch dieses Verfahren sichergestellt, dass die interne Uhr des Geräts synchron zu der Netzfrequenz des Netzes läuft. Dadurch wird vorteilhafterweise sichergestellt, dass die interne Uhr dieses Geräts genauso schnell abläuft wie die internen Uhren anderer Geräte, die ebenfalls mit der Netzfrequenz des Netzes synchronisiert werden. Somit laufen die internen Uhren solcher Geräte synchron. Da die interne Uhr des Geräts mittels des internen Taktgebers inkrementiert wird, kann die interne Uhr des Geräts vorteilhafterweise eine hohe zeitliche Auflösung aufweisen, insbesondere eine zeitliche Auflösung, die höher ist, als die Netzfrequenz des Netzes.

In einer Ausführungsform des Verfahrens wird die interne Uhr periodisch mit der Netzfrequenz des Netzes synchronisiert. Dadurch wird vorteilhafterweise sichergestellt, dass der Zeitfortschritt der internen Uhr des Geräts regelmäßig an die durch die Netzfrequenz des Netzes vorgegebene Zeitbasis angeglichen wird.

In einer Ausführungsform des Verfahrens ist das Netz ein Stromversorgungsnetz. Dabei werden Nulldurchgänge einer Spannung des Netzes erfasst. Dabei wird die interne Uhr bei jedem Nulldurchgang der Spannung mit der Netzfrequenz des Netzes synchronisiert.

Vorteilhafterweise lassen sich Nulldurchgänge der Spannung des Netzes mit hoher Genauigkeit erfassen. Dies ermöglicht vorteilhafterweise eine besonders genaue Synchronisation der internen Uhr mit der Netzfrequenz des Netzes.

In einer Ausführungsform des Verfahrens weist der interne Taktgeber eine Frequenz auf, die höher ist als die Netzfrequenz des Netzes. Die Frequenz des internen Taktgebers kann beispielsweise um mehrere Größenordnungen höher als die Netzfrequenz des Netzes sein. Vorteilhafterweise kann die interne Uhr des Geräts dadurch eine zeitliche Auflösung aufweisen, die feiner als eine Periode der Netzfrequenz des Netzes ist.

Das Verfahren umfasst Schritte zum Erfassen eines Messwerts und zum Versehen des Messwerts mit einem Zeitstempel der internen Uhr. Der Zeitstempel der internen Uhr kann dabei den Zeitpunkt angeben, zu dem der Messwert erfasst wurde. Durch die verfahrensgemäße Synchronisation der internen Uhr mit der Netzfrequenz des Netzes wird vorteilhafterweise erreicht, dass der Zeitstempel sich auf ein mit der Netzfrequenz des Netzes synchrones Zeitsystem bezieht.

In einer Ausführungsform des Verfahrens umfasst dieses einen weiteren Schritt zum Verschicken des mit dem Zeitstempel versehenen Messwerts über ein Datennetzwerk. Dies ermöglicht es vorteilhafterweise, den mit dem Zeitstempel versehenen Messwert an anderem Ort beispielsweise in einem weiteren Netzwerkteilnehmer des Datennetzwerks weiterzuverarbeiten.

In einer Ausführungsform des Verfahrens umfasst dieses einen Schritt zum Ausgeben eines Signals zu einem festgelegten Zeitwert der internen Uhr. Dabei ist es vorteilhaft, dass die interne Uhr mit der Netzfrequenz des Netzes synchronisiert wird, um eine Synchronität der Zeitwerte unterschiedlicher Netzwerkteilnehmer des Datennetzwerks sicherzustellen.

Ein Gerät umfasst eine interne Uhr, die mittels eines internen Taktgebers inkrementiert werden kann, und einen Netz-Anschluss zur Verbindung mit einem Netz. Dabei ist das Gerät ausgebildet, die interne Uhr mit einer Netzfrequenz des Netzes zu synchronisieren. Vorteilhafterweise läuft die interne Uhr dieses Geräts dadurch synchron zu der Netzfrequenz des Netzes. Dadurch wird sichergestellt, dass die interne Uhr dieses Geräts mit derselben Geschwindigkeit abläuft wie die internen Uhren anderer Geräte, die ihre internen Uhren ebenfalls mit der Netzfrequenz des Netzes synchronisieren. Da die interne Uhr dieses Geräts mittels des internen Taktgebers inkrementiert wird, kann die interne Uhr des Geräts vorteilhafterweise eine zeitliche Auflösung aufweisen, die feiner als eine Periode der Netzfrequenz des Netzes ist.

In einer Ausführungsform des Geräts kann der Netz-Anschluss mit einem Stromversorgungsnetz verbunden werden. Dabei ist das Gerät ausgebildet, Nulldurchgänge einer Spannung des Netzes zu erfassen. Vorteilhafterweise lassen sich Nulldurchgänge der Spannung des Netzes mit hoher Genauigkeit erfassen, wodurch eine besonders genaue Synchronisation der internen Uhr mit der Netzfrequenz des Netzes ermöglicht wird.

In einer Ausführungsform des Geräts weist der interne Taktgeber eine Frequenz auf, die höher ist als die Netzfrequenz des Netzes. Die Frequenz des internen Taktgebers kann dabei beispielsweise mehrere Größenordnungen höher sein als die Netzfrequenz des Netzes. Vorteilhafterweise kann die interne Uhr des Geräts dadurch eine zeitliche Auflösung aufweisen, die feiner als eine Periode der Netzfrequenz des Netzes ist.

Das Gerät ist ausgebildet, einen Messwert zu erfassen und den erfassten Messwert mit einem Zeitstempel der internen Uhr zu versehen. Der Zeitstempel kann dabei den Wert der internen Uhr zu dem Zeitpunkt angeben, an dem der Messwert erfasst wurde. Da die interne Uhr des Geräts mit der Netzfrequenz des Netzes synchronisiert werden kann, liegt der Zeitstempel dann in einem Zeitsystem vor, das synchron zu der Netzfrequenz des Netzes ist.

In einer Ausführungsform des Geräts ist dieses ausgebildet, den mit dem Zeitstempel versehenen Messwert über ein Datennetzwerk zu verschicken. Dies ermöglicht es vorteilhafterweise, den mit dem Zeitstempel versehenen Messwert an anderem Ort beispielsweise in einem weiteren Netzwerkteilnehmer des Datennetzwerks weiterzuverarbeiten.

In einer Ausführungsform des Geräts ist dieses ausgebildet, zu einem festgelegten Zeitwert der internen Uhr ein Signal auszugeben. Dabei ist es vorteilhaft, dass die interne Uhr des Geräts mit der Netzfrequenz des Netzes synchronisiert werden kann, um eine Synchronität der Zeitwerte unterschiedlicher Netzwerkteilnehmer des Datennetzwerks sicherzustellen.

In einer Ausführungsform des Geräts ist dieses als EtherCAT-Netzwerkteilnehmer ausgebildet. Vorteilhafterweise kann die interne Uhr dieses EtherCAT-Netzwerkteilnehmers mit der Netzfrequenz des Netzes synchronisiert werden.

Ein System umfasst ein erstes Gerät und ein zweites Gerät, die jeweils auf die vorgenannte Art ausgebildet sind. Dabei sind das erste Gerät und das zweite Gerät mit einem gemeinsamen Netz verbunden. Dadurch steht beiden Geräten die Netzfrequenz des gemeinsamen Netzes zur Verfügung, um die jeweiligen internen Uhren der Geräte zu synchronisieren. Wenn das erste Gerät seine interne Uhr mit der Netzfrequenz des Netzes synchronisiert und auch das zweite Gerät seine interne Uhr mit derselben Netzfrequenz des gemeinsamen Netzes synchronisiert, dann sind die internen Uhren beider Geräte vorteilhafterweise miteinander synchronisiert.

Die Erfindung wird im Folgenden anhand von Figuren näher erläutert. Dabei zeigen:
Fig. 1 eine schematische Darstellung eines Systems mit zwei mit einem Netz verbundenen Geräten;
Fig. 2 einen zeitlichen Verlauf einer Spannung des Netzes;
Fig. 3 ein erstes Datenpaket; und
Fig. 4 ein zweites Datenpaket.

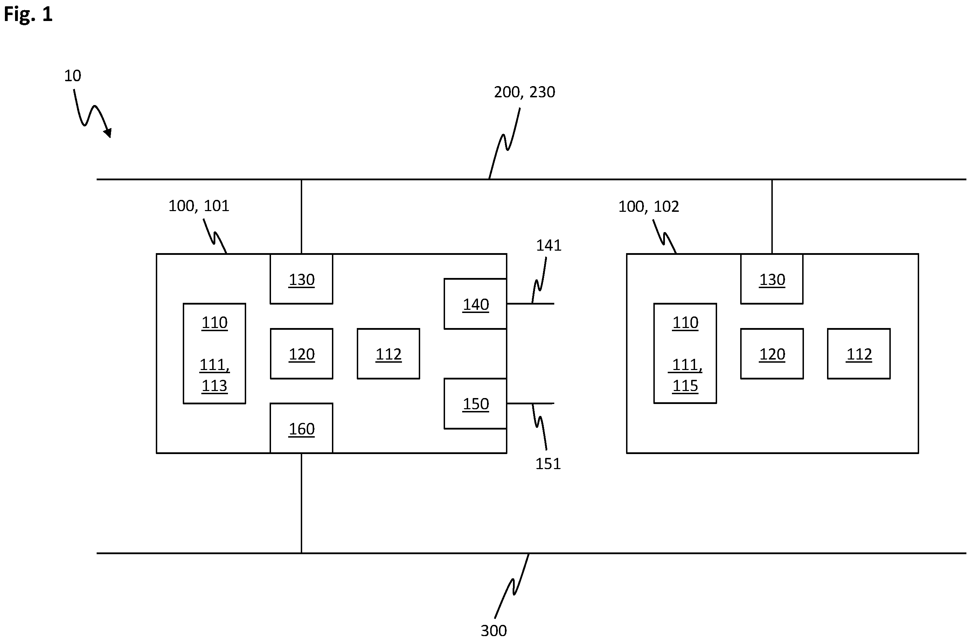

Fig. 1 zeigt eine schematische Darstellung eines Systems 10. Das System 10 umfasst eine Mehrzahl von Geräten 100. Im in Fig. 1 dargestellten Beispiel umfasst das System 10 ein erstes Gerät 100, 101 und ein zweites Gerät 100, 102. Das System 10 kann jedoch auch mehr als zwei Geräte 100 umfassen.

Die Geräte 100 des Systems 10 weisen Übereinstimmungen auf, die nachfolgend beschrieben werden. Daneben können zwischen den einzelnen Geräten 100 des Systems 10 auch Unterschiede bestehen. Im in Fig. 1 gezeigten Beispiel des Systems 10 bestehen zwischen dem ersten Gerät 100, 101 und dem zweiten Gerät 100, 102 Gemeinsamkeiten und Unterschiede.

Die Geräte 100 des Systems 10 weisen jeweils einen internen Taktgeber 110 auf. Der interne Taktgeber 110 stellt ein Taktsignal mit einer Frequenz 111 bereit. Dabei kann sich die Frequenz 111 des von dem internen Taktgeber 110 des ersten Geräts 100, 101 bereitgestellten Taktsignals derart von der Frequenz 111 des von dem internen Taktgeber 110 des zweiten Geräts 100, 102 bereitgestellten Taktsignals unterscheiden, dass das Taktsignal des internen Taktgebers 110 des ersten Geräts 100, 101 eine erste Frequenz 111, 113 aufweist und das Taktsignal des internen Taktgebers 110 des zweiten Geräts 100, 102 eine zweite Frequenz 111, 115 aufweist. Die Frequenzen 111 der internen Taktgeber 110 der Geräte 100 können beispielsweise einige MHz oder einige GHz betragen.

Jedes Gerät 100 des Systems 10 weist eine interne Uhr 120 auf. Die interne Uhr 120 kann beispielsweise als Datenregister ausgebildet sein. Ein in diesem Datenregister hinterlegter Zahlenwert repräsentiert einen Zeitwert der internen Uhr 120 des Geräts 100. Der Zeitwert der internen Uhr 120 kann dabei beispielsweise mit einer Auflösung von 1 µs oder 1 ns repräsentiert sein.

Jedes Gerät 100 ist ausgebildet, seine interne Uhr 120 mittels des internen Taktgebers 110 zu inkrementieren. Hierzu kann das jeweilige Gerät 100 beispielsweise einen anpassbaren Parameter 112 aufweisen, der angibt, mit welchem Verhältnis zur Frequenz 111 des internen Taktgebers 110 die interne Uhr 120 inkrementiert wird.

Jedes Gerät 100 des Systems 10 weist einen Netz-Anschluss 130 auf. Der Netz-Anschluss 130 ist dazu vorgesehen, das jeweilige Gerät 100 mit einem Netz 200 zu verbinden. Dabei werden alle Geräte 100 des Systems 10 mit demselben Netz 200 verbunden.

Das Netz 200 stellt eine Netzfrequenz 230 bereit.

Das Netz 200 kann beispielsweise ein Stromversorgungsnetz sein. In diesem Fall stellt das Netz 200 eine Spannung 210 bereit, deren Spannungswert sich periodisch mit der Netzfrequenz 230 ändert. In dem anhand der Figuren beschriebenen Beispiel ist das Netz 200 als Stromversorgungsnetz ausgebildet.

Das Netz 200 kann aber auch ein anderes Netz sein, das die Netzfrequenz 230 bereitstellt. Beispielsweise kann das Netz 200 durch eine einfache Leitung gebildet sein, in die die Netzfrequenz 230 eingekoppelt wird.

Falls das Netz 200 ein Stromversorgungsnetz ist, kann das Netz 200 den Geräten 100 zur Energieversorgung dienen. Dies ist jedoch nicht zwingend notwendig. Die Geräte 100 können ihren Energiebedarf auch aus anderen Energiequellen decken.

Die Frequenzen 111 der internen Taktgeber 110 der einzelnen Geräte 100 des Systems 10 können jeweils durch Bauteiltoleranzen bedingte Abweichungen von ihren Sollwerten aufweisen. Außerdem können die Frequenzen 111 der internen Taktgeber 110 der Geräte 100 des Systems 10 zeitlichen Schwankungen unterliegen, die beispielsweise durch Temperaturänderungen bedingt sein können. Dies hat zur Folge, dass die internen Uhren 120 der Geräte 100 des Systems 10 mit voneinander abweichenden Geschwindigkeiten laufen können, wenn die internen Uhren 120 nicht synchronisiert werden. Laufen beispielsweise die interne Uhr 120 des ersten Geräts 100, 101 und die interne Uhr 120 des zweiten Geräts 100, 102 mit unterschiedlichen Geschwindigkeiten ab, so driften die Zeit der internen Uhr 120 des ersten Geräts 100, 101 und die Zeit der internen Uhr 120 des zweiten Geräts 100, 102 im zeitlichen Verlauf zunehmend auseinander.

Um dies zu verhindern, ist jedes Gerät 100 des Systems 10 ausgebildet, die interne Uhr 120 mit der Netzfrequenz 230 des gemeinsamen Netzes 200 zu synchronisieren. Dadurch werden auch die internen Uhren 120 der einzelnen Geräte 100 miteinander synchronisiert.

Die Netzfrequenz 230 ist typischerweise um mehrere Größenordnungen kleiner als die Frequenz 111 des internen Taktgebers 110 der Geräte 100. Die Netzfrequenz 230 kann beispielsweise 50 Hz oder 60 Hz betragen.

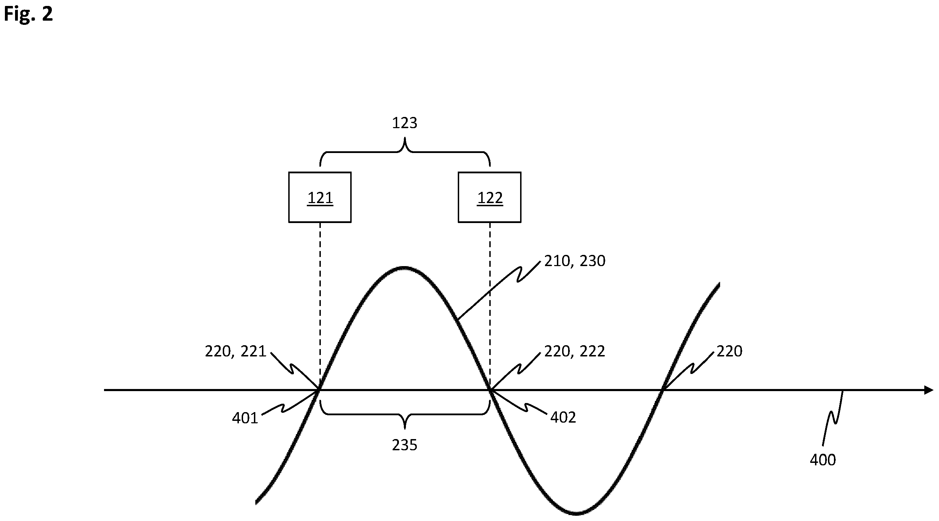

Fig. 2 zeigt in schematischer Darstellung einen von einer Zeit 400 abhängigen Verlauf der Spannung 210 des Netzes 200. Die Spannung 210 weist im Verlauf der Zeit 400 periodisch auftretende Nulldurchgänge 220 auf. Zu einem ersten Zeitpunkt 401 tritt ein erster Nulldurchgang 220, 221 der Spannung 210 auf. Zu einem zweiten Zeitpunkt 402 tritt ein zweiter Nulldurchgang 220, 222 der Spannung 210 auf. Zwischen dem ersten Nulldurchgang 220, 221 und dem zweiten Nulldurchgang 220, 222 liegt eine Halbwelle der Spannung 210, sodass der zeitliche Abstand zwischen dem ersten Zeitpunkt 401 und dem zweiten Zeitpunkt 402 einer Halbperiodendauer 235 entspricht, die sich als die Hälfte des Kehrwerts der Netzfrequenz 230 des Netzes 200 berechnet. Beträgt die Netzfrequenz 230 beispielsweise 50 Hz, so beträgt die Halbperiodendauer 235 10 ms.

Um die jeweilige interne Uhr 120 mit der Netzfrequenz 230 des Netzes 200 zu synchronisieren, kann jedes Gerät 100 dazu ausgebildet sein, die Nulldurchgänge 220 der Spannung 210 des Netzes 200 zu erfassen. Dabei wird bei jedem Nulldurchgang 220 ein gegenwärtiger Wert der internen Uhr 120 des jeweiligen Geräts 100 ermittelt. Dies ist in Fig. 2 schematisch dargestellt. Bei dem ersten Nulldurchgang 220, 221 der Spannung 210 zu dem ersten Zeitpunkt 401 weist die interne Uhr 120 einen ersten Uhrenwert 121 auf. Bei dem zweiten Nulldurchgang 220, 222 zu dem zweiten Zeitpunkt 402 weist die interne Uhr 120 einen zweiten Uhrenwert 122 auf. Da die interne Uhr 120 zwischen dem ersten Zeitpunkt 401 und dem zweiten Zeitpunkt 402 inkrementiert worden ist, ist der zweite Uhrenwert 122 größer als der erste Uhrenwert 121. Die Differenz zwischen dem ersten Uhrenwert 121 und dem zweiten Uhrenwert 122 kann als Uhrenfortschritt 123 bezeichnet werden.

Falls dem jeweiligen Gerät 100 die Netzfrequenz 230 des Netzes 200 bekannt ist, kann die Synchronisation der internen Uhr 120 mit der Netzfrequenz 230 des Netzes 200 auf die folgende Weise erfolgen: Der zwischen dem ersten Zeitpunkt 401 und dem zweiten Zeitpunkt 402 vergangene Zeitraum entspricht der dem jeweiligen Gerät 100 ebenfalls bekannten Halbperiodendauer 235 der Netzfrequenz 230 des Netzes 200. Durch einen Vergleich des Uhrenfortschritts 123 mit der Halbperiodendauer 235 kann also festgestellt werden, ob die interne Uhr 120 des jeweiligen Geräts 100 zu schnell oder zu langsam abläuft. Ist der Uhrenfortschritt 123 größer als die Halbperiodendauer 235, so läuft die interne Uhr 120 zu schnell ab und muss verlangsamt werden. Ist der Uhrenfortschritt 123 geringer als die Halbperiodendauer 235, so läuft die interne Uhr 120 zu langsam ab und muss beschleunigt werden. Das Verlangsamen oder Beschleunigen der internen Uhr 120 kann bei jedem Gerät 100 des Systems 10 beispielsweise durch eine Anpassung des anpassbaren Parameters 112 erfolgen, der angibt, mit welchem Verhältnis zur Frequenz 111 des internen Taktgebers 110 die jeweilige interne Uhr 120 inkrementiert wird.

Eine alternative Möglichkeit zur Synchronisation der internen Uhr 120 mit der Netzfrequenz 230 des Netzes 200 besteht darin, die Geschwindigkeit der internen Uhr 120 so zu regeln, dass der Uhrenfortschritt 123 zwischen aufeinanderfolgenden Nulldurchgängen 220 der Spannung 210 stets etwa gleich bleibt. Erhöht sich der Uhrenfortschritt 123 zwischen aufeinanderfolgenden Nulldurchgängen 220 der Spannung 210 mit der Zeit, so läuft die interne Uhr 120 zu schnell ab und muss verlangsamt werden. Reduziert sich der Uhrenfortschritt 123 zwischen aufeinanderfolgenden Nulldurchgängen 220 der Spannung 210 mit der Zeit, so läuft die interne Uhr 120 zu langsam ab und muss beschleunigt werden. Das Verlangsamen oder Beschleunigen der internen Uhr 120 kann wiederum bei jedem Gerät 100 des Systems 10 beispielsweise durch eine Anpassung des anpassbaren Parameters 112 erfolgen, der angibt, mit welchem Verhältnis zur Frequenz 111 des internen Taktgebers 110 die jeweilige interne Uhr 120 inkrementiert wird. Bei dieser Möglichkeit zur Synchronisation der internen Uhr 120 mit der Netzfrequenz 230 des Netzes 200 müssen die Geräte 100 die Netzfrequenz 230 des Netzes 200 nicht kennen.

Die beschriebene Synchronisation der internen Uhr 120 mit der Netzfrequenz 230 des Netzes 200 erfolgt zweckmäßigerweise periodisch. Beispielsweise kann die interne Uhr 120 bei jedem Nulldurchgang 220 der Spannung 210 des Netzes 200 mit der Netzfrequenz 230 des Netzes 200 synchronisiert werden. Es ist aber auch möglich, die interne Uhr 120 seltener als bei jedem Nulldurchgang 220 der Spannung 210 des Netzes 200 zu synchronisieren. Beispielsweise könnte die interne Uhr nur bei jedem zweiten Nulldurchgang 220 der Spannung 210 des Netzes 200 synchronisiert werden.

Die Geräte 100 des Systems 10 können zusätzlich zu den vorstehend beschriebenen Komponenten, die bei allen Geräten 100 vorhanden sind, weitere Komponenten und Merkmale aufweisen, die alternativ aber auch entfallen können. Nachfolgend werden beispielhaft einige derartige Merkmale beschrieben. Jedes der Geräte 100 des Systems 10 kann wahlweise eines oder mehrere dieser oder weiterer Merkmale aufweisen.

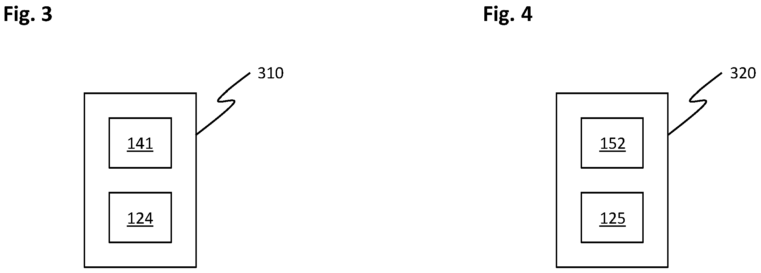

Im in Fig. 1 gezeigten Beispiel weist das erste Gerät 100, 101 einen Sensoreingang 140 auf. Das erste Gerät 100, 101 ist dazu ausgebildet, mittels des Sensoreingangs 140 einen Messwert 141 zu erfassen. Der Messwert 141 kann beispielsweise ein elektrischer Spannungswert sein. Das erste Gerät 100, 101 kann dazu ausgebildet sein, den Messwert 141 mit einem Zeitstempel 124 zu versehen, indem aus dem Messwert 141 und dem Zeitstempel 124 ein in Fig. 3 schematisch dargestelltes erstes Datenpaket 310 gebildet wird. Der Zeitstempel 124 gibt dabei den Wert der internen Uhr 120 des ersten Geräts 100, 101 zu dem Zeitpunkt an, zu dem der Messwert 141 erfasst worden ist.

Das erste Gerät 100, 101 weist in dem in Fig. 1 gezeigten Beispiel einen Datenanschluss 160 auf, über den das erste Gerät 100, 101 mit einem Datennetzwerk 300 verbunden ist. Das Datennetzwerk 300 kann beispielsweise ein Ethernet-basiertes Datennetzwerk sein. Beispielsweise kann das Datennetzwerk 300 ein EtherCAT-Datennetzwerk sein. In diesem Fall ist das erste Gerät 100, 101 als EtherCAT-Netzwerkteilnehmer ausgebildet.

Das erste Gerät 100, 101 kann dazu ausgebildet sein, das in Fig. 3 dargestellte erste Datenpaket 310 mit dem Messwert 141 und dem dem Messwert 141 zugeordneten Zeitstempel 124 über das Datennetzwerk 300 zu verschicken. Dabei kann das erste Gerät 100, 101 das erste Datenpaket 310 beispielsweise an ein weiteres Gerät 100 des Systems 10 verschicken. Da dieses weitere Gerät 100 seine interne Uhr 120 ebenfalls mit der Netzfrequenz 230 des Netzes 200 synchronisiert, bezieht sich der in dem ersten Datenpaket 310 enthaltene Zeitstempel 124 dann auf ein Zeitsystem, das mit der internen Uhr 120 des weiteren Geräts 100 synchron ist.

Im in Fig. 1 gezeigten Beispiel weist das erste Gerät 100, 101 einen Signalausgang 150 auf. Das erste Gerät 100, 101 ist dazu ausgebildet, über den Signalausgang 150 ein Signal 151 auszugeben. Das erste Gerät 100, 101 kann beispielsweise dazu ausgebildet sein, zu einem festgelegten Zeitwert 125 der internen Uhr 120 des ersten Geräts 100, 101 das Signal 151 mit einem festgelegten Signalwert 152 auszugeben. Den Zeitwert 125 und den Signalwert 152 kann das erste Gerät 100, 101 beispielsweise in einem in Fig. 4 schematisch dargestellten zweiten Datenpaket 320 über das Datennetzwerk 300 empfangen. Das erste Gerät 100, 101 kann das zweite Datenpaket 320 beispielsweise von einem weiteren Gerät 100 des Systems 10 empfangen. Da die interne Uhr 120 dieses weiteren Geräts 100 ebenfalls mit der Netzfrequenz 230 des Netzes 200 synchronisiert wird, kann das weitere Gerät 100 den Zeitwert 125 auf Grundlage seiner internen Uhr 120 festlegen, die synchron zu der internen Uhr 120 des ersten Geräts 100, 101 ist.

Die Geräte 100 des Systems 10 können beispielsweise als Geräte des Internets der Dinge (Internet of Things, kurz loT) ausgebildet sein (IoT-Geräte). Die Geräte 100 des Systems 10 können beispielsweise verteilte Steuer- und Messgeräte einer Industrieanlage, eines Windparks, eines Solarparks oder einer anderen Anlage sein. Beispielsweise kann das erste Gerät 100, 101 des Systems 10 an einem Flügel einer Windenergieanlage angeordnet sein, während das zweite Gerät 100, 102 an einer Nabe der Windenergieanlage angeordnet ist.

### Bezugszeichenliste

- 10: System

- 100: Gerät
- 101: erstes Gerät
- 102: zweites Gerät

- 110: interner Taktgeber
- 111: Frequenz
- 112: Parameter
- 113: erste Frequenz
- 115: zweite Frequenz

- 120: interne Uhr
- 121: erster Uhrenwert
- 122: zweiter Uhrenwert
- 123: Uhrenfortschritt
- 124: Zeitstempel
- 125: Zeitwert

- 130: Netz-Anschluss

- 140: Sensoreingang
- 141: Messwert

- 150: Signalausgang
- 151: Signal
- 152: Signalwert

- 160: Datenanschluss

- 200: Netz
- 210: Spannung
- 220: Nulldurchgang
- 221: erster Nulldurchgang
- 222: zweiter Nulldurchgang
- 230: Netzfrequenz
- 235: Halbperiodendauer

- 300: Datennetzwerk
- 310: erstes Datenpaket
- 320: zweites Datenpaket

- 400: Zeit
- 401: erster Zeitpunkt
- 402: zweiter Zeitpunkt

## Patentansprüche

1. Verfahren zum Betreiben eines Geräts (100),
das einen internen Taktgeber (110) und eine interne Uhr (120) aufweist und mit einem Netz (200) verbunden ist,
wobei die interne Uhr (120) mittels des internen Taktgebers (110) inkrementiert wird, wobei die interne Uhr (120) mit einer Netzfrequenz (230) des Netzes (200) synchronisiert wird,
wobei das Verfahren die folgenden Schritte umfasst:
- Erfassen eines Messwerts (141);
- Versehen des Messwerts (141) mit einem Zeitstempel (124) der internen Uhr (120).

2. Verfahren gemäß Anspruch 1,
wobei die interne Uhr (120) periodisch mit der Netzfrequenz (230) des Netzes (200) synchronisiert wird.

3. Verfahren gemäß Anspruch 2,
wobei das Netz (200) ein Stromversorgungsnetz ist,
wobei Nulldurchgänge (220) einer Spannung (210) des Netzes (200) erfasst werden,
wobei die interne Uhr (120) bei jedem Nulldurchgang (220) der Spannung (210) mit der Netzfrequenz (230) des Netzes (200) synchronisiert wird.

4. Verfahren gemäß einem der vorhergehenden Ansprüche,
wobei der interne Taktgeber (110) eine Frequenz (111) aufweist, die höher ist als die Netzfrequenz (230) des Netzes (200).

5. Verfahren gemäß einem der vorhergehenden Ansprüche,
wobei das Verfahren den folgenden weiteren Schritt umfasst:
- Verschicken des mit dem Zeitstempel (124) versehenen Messwerts (141) über ein Datennetzwerk (300).

6. Verfahren gemäß einem der vorhergehenden Ansprüche,
wobei das Verfahren den folgenden Schritt umfasst:
- Ausgeben eines Signals (151) zu einem festgelegten Zeitwert (125) der internen Uhr (120).

7. Gerät (100)
mit einer internen Uhr (120), die mittels eines internen Taktgebers (110) inkrementiert werden kann,
und mit einem Netz-Anschluss (130) zur Verbindung mit einem Netz (200),
wobei das Gerät (100) ausgebildet ist, die interne Uhr (120) mit einer Netzfrequenz (230) des Netzes (200) zu synchronisieren,
wobei das Gerät (100) ausgebildet ist, einen Messwert (141) zu erfassen und den erfassten Messwert (141) mit einem Zeitstempel (124) der internen Uhr (120) zu versehen.

8. Gerät (100) gemäß Anspruch 7,
wobei der Netz-Anschluss (130) mit einem Stromversorgungsnetz verbunden werden kann,
wobei das Gerät (100) ausgebildet ist, Nulldurchgänge (220) einer Spannung (210) des Netzes (200) zu erfassen.

9. Gerät (100) gemäß einem der Ansprüche 7 und 8,
wobei der interne Taktgeber (110) eine Frequenz (111) aufweist, die höher ist als die Netzfrequenz (230) des Netzes (200).

10. Gerät (100) gemäß einem der Ansprüche 7 bis 9,
wobei das Gerät (100) ausgebildet ist, den mit dem Zeitstempel (124) versehenen Messwert (141) über ein Datennetzwerk (300) zu verschicken.

11. Gerät (100) gemäß einem der Ansprüche 7 bis 10,
wobei das Gerät (100) ausgebildet ist, zu einem festgelegten Zeitwert (125) der internen Uhr (120) ein Signal (151) auszugeben.

12. Gerät (100) gemäß einem der Ansprüche 7 bis 11,
wobei das Gerät (100) als EtherCAT-Netzwerkteilnehmer ausgebildet ist.

13. System (10)
mit einem ersten Gerät (100, 101) und einem zweiten Gerät (100, 102), die jeweils gemäß einem der Ansprüche 7 bis 12 ausgebildet sind,
wobei das erste Gerät (100, 101) und das zweite Gerät (100, 102) mit einem gemeinsamen Netz (200) verbunden sind.

## Claims

1. A method for operating a device (100),
which comprises an internal clock generator (110) and an internal clock (120) and is connected to a network (200),
wherein the internal clock (120) is incremented by means of the internal clock generator (110),
wherein the internal clock (120) is synchronized with a network frequency (230) of the network (200),
wherein the method comprises the following steps:
- detecting a measuring value (141);
- providing the measuring value (141) with a time stamp (124) of the internal clock (120).

2. The method according to claim 1,
wherein the internal clock (120) is periodically synchronized with the network frequency (230) of the network (200).

3. The method according to claim 2,
wherein the network (200) is a power-supply network,
wherein zero crossings (220) of a voltage (210) of the network (200) are detected, wherein the internal clock (120) is synchronized with the network frequency (230) of the network (200) for each occurring zero crossing (220) of the voltage (210).

4. The method according to any one of the preceding claims,
wherein the internal clock generator (110) has a frequency (111) which is higher than the network frequency (230) of the network (200).

5. The method according to any one of the preceding claims,
wherein the method comprises the following further step:
- sending out the measuring value (141) provided with the time stamp (124) via a data network (300).

6. The method according to any one of the preceding claims,
wherein the method comprises the following step:
- outputting a signal (151) at a predefined time value (125) of the internal clock (120).

7. A device (100)
comprising an internal clock (120) which may be incremented by means of an internal clock generator (110),
and comprising a network connection (130) for connecting to a network (200) wherein the device (100) is embodied to synchronize the internal clock (120) with a network frequency (230) of the network (200),
wherein the device (100) is configured to detect a measuring value (141) and to provide the detected measuring value (141) with a time stamp (124) of the intenal clock (120).

8. The device (100) according to claim 7,
wherein the network connection (130) may be connected to a power-supply network, wherein the device (100) is embodied to detect zero crossings (220) of a voltage (210) of the network (200).

9. The device (100) according to any one of claims 7 and 8,
wherein the internal clock generator (110) has a frequency (111) which is higher than the network frequency (230) of the network (200).

10. The device (100) according to any one of claims 7 to 9,
wherein the device (100) is embodied to send out the measuring value (141) provided with the time stamp (124) via a data network (300).

11. The device according to any one of claims 7 to 10,
wherein the device (100) is embodied to output a signal (151) at a predefined time value (125) of the internal clock.

12. The device (100) according to any one of claims 7 to 11,
wherein the device (100) is embodied as an EtherCAT-network subscriber.

13. A system (10),
comprising a first device (100, 101) and a second device (100, 102), each of which is embodied according to any one of claims 7 to 12,
wherein the first device (100, 101) and the second device (100, 102) are connected to a shared network (200).

## Revendications

1. Procédé pour faire fonctionner un appareil (100), qui comprend un générateur (110) d'horloge interne et une horloge interne (120) et qui est relié à un réseau (200), l'horloge interne (120) étant incrémentée au moyen du générateur (110) d'horloge interne,
l'horloge interne (120) étant synchronisée avec une fréquence de réseau (230) du réseau (200),
le procédé comprenant les étapes suivantes :
- enregistrement d'une valeur mesurée (141) ;
- attribution à la valeur mesurée (141) d'un horodatage (124) de l'horloge interne (120).

2. Procédé selon la revendication 1,
dans lequel l'horloge interne (120) est périodiquement synchronisée avec la fréquence de réseau (230) du réseau (200).

3. Procédé selon la revendication 2,
dans lequel le réseau (200) est un réseau d'alimentation électrique,
dans lequel il est détecté des passages à zéro (220) d'une tension (210) du réseau (200),
dans lequel l'horloge interne (120) est synchronisée avec la fréquence de réseau (230) du réseau (200) à chaque passage à zéro (220) de la tension (210).

4. Procédé selon l'une des revendications précédentes, dans lequel le générateur (110) d'horloge interne présente une fréquence (111) supérieure à la fréquence de réseau (230) du réseau (200).

5. Procédé selon l'une des revendications précédentes, le procédé comprenant l'étape supplémentaire suivante :
- envoi de la valeur mesurée (141) munie de l'horodatage (124) via un réseau de données (300).

6. Procédé selon l'une des revendications précédentes, le procédé comprenant l'étape suivante :
- émission d'un signal (151) à une valeur temporelle prédéterminée (125) de l'horloge interne (120).

7. Appareil (100)
comprenant une horloge interne (120) qui est apte à être incrémentée au moyen d'un générateur (110) d'horloge interne,
et comprenant une connexion (130) à un réseau, pour la connexion à un réseau (200),
l'appareil (100) étant conçu de façon à synchroniser l'horloge interne (120) avec une fréquence de réseau (230) du réseau (200),
l'appareil (100) étant conçu de façon à détecter une valeur mesurée (141) et pour fournir à la valeur mesurée détectée (141) un horodatage (124) de l'horloge interne (120).

8. Appareil (100) selon la revendication 7,
dans lequel la connexion au réseau (130) est apte à être reliée à un réseau d'alimentation électrique,
l'appareil (100) étant conçu de façon à détecter des passages à zéro (220) d'une tension (210) du réseau (200).

9. Appareil (100) selon l'une des revendications 7 et 8,
dans lequel le générateur (110) d'horloge interne présente une fréquence (111) supérieure à la fréquence de réseau (230) du réseau (200).

10. Appareil (100) selon l'une des revendications 7 à 9,
l'appareil (100) étant configuré pour envoyer la valeur mesurée (141) munie de l'horodatage (124) via un réseau de données (300).

11. Appareil (100) selon l'une des revendications 7 à 10,
l'appareil (100) étant conçu pour émettre un signal (151) à une valeur temporelle déterminée (125) de l'horloge interne (120).

12. Appareil (100) selon l'une des revendications 7 à 11,
l'appareil (100) étant conçu sous la forme d'un participant à un réseau EtherCAT.

13. Système (10)
comprenant un premier appareil (100, 101) et un deuxième appareil (100, 102), chacun étant conçu selon l'une des revendications 7 à 12,
le premier appareil (100, 101) et le deuxième appareil (100, 102) étant reliés à un réseau commun (200).
